# EUROPEAN PATENT APPLICATION

(11) **EP 4 147 869 A1**
(43) Date of publication of application: **15.03.2023**
(21) Application number: 21743237.6
(22) Date of filing: 05.05.2021
(51) Int. Cl.: B32B 5/02, B32B 5/08, B32B 7/09, B32B 7/12, B32B 27/40, B32B 27/36, B29C 63/00, B32B 5/26, B32B 27/12

(54) **ABSORBENT STRUCTURE FOR ITEMS OF CLOTHING, OPERATING METHOD AND USES THEREOF**

(30) Priority: 05.05.2020 PT 2020116342
(71) Applicant: Impetus Portugal - Têxteis SA, 4740-141 Apúlia (PT)
(72) Inventor: QUEIROGA FIGUEIREDO, Alberto, 4470-598 Maia (PT); CORREIA DA CRUZ, Juliana Patrícia, 4770-868 Castelões VNF (PT)
(74) Representative: Patentree
(86) International application number: PCT/IB2021/053816
(87) International publication number: WO 2021/224832

(57) **Abstract**

The present disclosure concerns a clothing item absorbing structure, in particular to a washable and reusable structure, for the absorption of body fluids comprising at least a set of four overlapping layers, comprising: a first layer with high density and porosity synthetic fibers suitable for the entry of body fluids; a second layer comprising a combination of hydrophilic and hydrophobic fibers with a plurality of protruding channels for dispersing body fluids; a third layer of cellulosic fibers capable of neutralizing odors and absorbing moisture; a fourth layer comprising a polymer, microporous and liquid impermeable membrane; and a strip connected along the periphery of said set of layers, wherein the strip together with the fourth layer seals said set of layers to prevent leakage of body fluids.

The present disclosure relates to clothing items, namely underwear clothing items that incorporate the absorbing structure described in the present disclosure.

## Description

### TECHNICAL FIELD

The present disclosure refers to an absorbing system for use in daily wear underwear, comprising a fluid absorbing system, particularly body fluids, as well as an odor neutralization system, without compromising the user mobility and guaranteeing user comfort, due to the feeling of dryness close to the skin, as well as the imperceptibility of the product.

### BACKGROUND

With all advances achieved by science in the last decades and the new international guidelines for sustainability, there is a growing need to develop new solutions for products and processes with less ecological impact. In this sense, the search for substitutes for single-use products is an emerging need, in order to reduce the volumes of waste produced, which in most cases is not recyclable, mainly in the health and well-being sector.

Thus, the challenge of closing material cycles and regenerating natural assets is an exponential function of the product's complexity and the length of the supplement chain.

With this it is possible to contribute to a greater preservation of resources which are increasingly scarce and subject to increasing environmental pressure or changing prices, reducing the costs of industries; for the production of more durable, sustainable and less toxic products, thus increasing capital and quality of life; greater preservation of the environment, substantially reducing carbon emissions and preserving endangered resources and an increase in the competitiveness of key sectors of industry, including production, waste management and recycling, as well as imports of raw materials. [1]

Regarding the reduction of disposable body fluid absorbents such as sweating, urine, menstrual fluid and breast milk, the pillars of sustainability clearly respond, in this sense the development of reusable absorbing systems is clearly a benefit, wherein focus is also directed to the options of materials and processes that allow sustainability.

One of the main factors to be considered in body liquid absorbing systems in general, is the diffusion of water vapor in the fibrous structure, which is influenced by:
(i) fraction of fibers;
(ii) cross section of the fiber;
(iii) thickness of the textile;
(iv) air permeability; and
(v) type of finish.

Specifically, the transport of liquids in fibrous structures, as is the case with textiles, is mainly governed by wettability and capillarity mechanisms. Although there is diffusion at this stage, its effect is not significant when compared to the others [2].

Absorption characteristics of the fiber bundles depend mainly on the surface roughness of the fibers, as well as on the geometry of the fiber bundles and the pore size distribution [3], [4]. In order to build a terry with the characteristics indicated for the intended end use, it is extremely important to study and evaluate the terry fabrics in terms of static and dynamic absorption, since they give us different information.

Other of the main characteristics associated with body liquid absorbing systems, refers to thermophysiological, sensory and ergonomic comfort.

Thermophysiological comfort is dependent on moisture control and heat transmission through the textile. The creation of a microclimate between the individual's skin and the textile allows the balance between excessive heating due to the increase in the individual's metabolic activity and the textile's ability to dissipate sweat and heat, creating a feeling of comfort during the execution of a physical activity [5], [6]. The sensory comfort of the skin depends on the properties of the textile surface, the friction of the surface, the roughness and smoothness. While ergonomic comfort depends on the shape and freedom of movement, adjustability to the body and physical activity [7].

Nowadays there is a high quantity and variety of yarns with cross section synthetic fibers, with capillaries that favor the transport of moisture, such as Dry-release, X-Dry, Dry-max, 4DG Fiber among many other commercial fibers and yarns [8] - [10]. However, most of these fibers are used in continuous multifilament yarns, although some solutions use cut fibers, although quite minimal.

The concept of improving these properties has evolved over time, by differentiating the surface area of these fibers, ranging the types of capillaries that favor the transport of moisture, but always on a micro and macro scale. This type of fiber and yarn has been extensively explored in sports products, with regard to the comfort of the athlete [8] - [10].

A niche of absorbent products is related to feminine hygiene products, which are used by women during menstruation, vaginal discharge or other body functions related to the vulva. The need for products other than the conventional ones, such as tampons and sanitary napkins, arose mainly for women with a more intense menstrual flow, wherein products existing until then did not meet the requirements of those women, and could allow the leakage of the fluid due to incompatibility of the width of the sanitary napkin and the width of the underwear in the groin area and the lack of a barrier at the edges of the sanitary napkin.

Thus, disposable protective underwear for feminine hygiene began to be created, similar to those already manufactured on the market for urinary incontinence. This type of disposable product guarantees not only greater absorption, but also a greater absorption area, being easy to use.

Disposable products are an innovation of modern life and their evolution has to respond to the needs of the individuals who use them. In general, these needs are based on the feeling of clean and dry, protection and control, as well as comfort and convenience.

In particular, feminine hygiene products still have to fulfill some fundamental requirements, such as functioning in a wide range of menstrual flow, in different conditions and activities, being adapted for contact with the skin, being easily placed and discarded [11] and inhibiting odor [12]. Despite its advantages and affordable price, the current concerns are the environmental impact, the product's durability and recycling and biodegradability [13].

Rejeanne brand launched a range of underwear products aimed at the menstrual cycle of women. Three underwear models with different absorbing capacities according to flow abundance are part of this product line. Although such products have several characteristics that make them attractive to the consuming public, such products contain polyurethane which has raised concerns about toxicity and, still, bamboo that requires a special wash in order not to suffer changes in its dimensional stability.

Fempo brand also sells underwear-like products that provide 12h of protection, dry and odor free feeling. However, with regard to the product's absorbing system, it is composed of bamboo, with natural antibacterial and anti-odor properties, in addition to presenting an ultrathin, water-repellent and breathable fabric. However, this product presents the same problem mentioned above, and bamboo needs to be taken care of in terms of shrinkage.

Smoon has a line of products that can absorb the equivalent to two tampons and offers an average of 12 hours of protection, providing a dry and anti-odor sensation. However, these products have polyurethane in their composition, which has raised some questions regarding toxicity thereof. In addition, the absorption of the membrane absorbs the equivalent to 2 conventional tampons, which may not be sufficient for women with intense menstrual flow.

Despite the various attempts by the market to provide effective items in preventing the leakage of liquids in underwear clothing items, it is clear that currently, none of these products perform their function with total efficiency and do not promote safety to the user.

Regarding fluids or liquids from breastfeeding, breastfeeding discs have been developed. Companies manufacturing these items try to use softer and smoother materials for the chest. Some went even further and added medication or heat treatment to the breastfeeding discs.

Maternity clothing and accessory industry continues to evolve and seeks to increase the comfort for women and the ease of use of the products. Bamboodies brand sells reusable and sustainable breastfeeding discs. Its products use bamboo rayon in order to be an eco-friendly brand and to obtain a soft inner layer for the nipple. Although the product is disposable, has superabsorbent, antimicrobial and antibacterial characteristics, bamboo fibers nevertheless increase the economic value of the product and may not, in fact, have the characteristics expected due to the inherent chemical process.

Pigeon India brand manufactures ultrathin and light disposable breastfeeding discs, having a superabsorbing center and a breathable outer layer. They have double adhesive so not to unstick and keep the skin and clothes dry and comfortable. Another model of the brand uses honeycomb that prevents milk from spreading, absorbs quickly and keeps the milk trapped in this layer. The honeycomb layer also allows for breathability. These products have the disadvantage of not being reusable, increasing the waste, as well as the economic cost.

Another type of fluid excreted by the human body is sweat which, in general, causes discomfort, embarrassment, psychological, social and physical issues, such as skin allergies. Related to this physiological aspect, there are several pathologies, such as hyperhidrosis and Ross Syndrome. In addition, other situations of excessive sweating are, for example, intense physical exercise or simply situations of social pressure. In order to respond to the needs of these people, several products are marketed and continue to be improved. Some of these products are deodorants, antiperspirant creams and sweat-absorbing disks.

Purax brand sells disposable discs that absorb sweat, with adhesive to adhere directly to the skin, that are breathable and hygienic, control odor, do not reduce the user's mobility and are practical to put on and remove. They have an absorbing effect for 8 hours, and a butterfly shape so as to adapt to the armpit. Although practical, these discs are not reusable, thus discarding environmental concerns.

Thompson Tee brand produces anti-sweat sweaters, that is, they incorporate a layer system that facilitates reverse osmosis and releases sweat as steam, leaving the skin dry and fresh. It has a layer that absorbs sweat and body heat and another layer with pores that allows sweat to pass through. The barrier is made by a layer of ultrathin film that prevents sweat from returning to the skin. As materials, they use bamboo rayon and combed cotton. The referred product allows the absorbing membrane to remain fixed in the armpit area, however, bamboo fibers tend to shrink when washing, which is not suitable for a sweater.

EP2879534B1 refers to an underwear that has the ability to absorb body fluids, associated with menstruation and incontinence. More specifically, underwear is an underwear that has properties such as moisture management, antibacterial and comfort. In addition to this, it is also stain-proof and does not allow the fluid to pass outside the product. The product disclosed includes a fabric with one or more very thin (100-500 g/cm2) layers and a structured multilayer pad that is integrated into the interior surface of the fabric. The multilayer structure includes: the innermost layer that can be treated with a nanoparticle solution in order to absorb moisture and a material with antibacterial properties in order to prevent infections; a layer that can be composed, for example, of cotton or other materials that can effectively absorb liquid and moisture; a layer that can include materials such as, for example, cotton mixed with moisture-impermeable materials (wax, urethane) on the outer surface to prevent fluid from escaping; and the outermost layer composed of a mixture of elastanes that presents a thicker texture, in order to camouflage the seams and, thus, these are not visible in the garment. However, the pad is not attached to the other layers of the piece, so it can be displaced causing fluid leakage.

US 2015/0290049 A1 refers to an absorbing, washable and reusable underwear, capable of absorbing and retaining fluid in a waterproofed area; more particularly, intended for people with incontinence and/or the like. The absorbing pad is composed of at least one layer based on a fibrous absorbing material, and as an extra, it can include active ingredients such as colloidal silver and/or activated carbon. The product referred to in the application focuses on incontinence, right on the retention of urine and, therefore, is not prepared for larger amounts of fluid as can happen during menstruation, or even breastfeeding.

US 2012/0129428A1 describes an adhesive breastfeeding disc with an absorbing inner layer that is in contact with the woman's breast, an outer layer that is in contact with the bra provided with an adhesive in circumference that joins to the user's breast. The product in question also has a velcro strap and an adhesive flap connecting the upper part of the product to the chest. The inner layer of the disc is concave and formed by a non-woven material, while the outer part is convex and composed of an impermeable material, so that the product goes around the breast and covers the nipple. The fact that the breastfeeding disk supports itself, holding on to the breast without the aid of a bra, can cause some discomfort. Mainly, by the use of adhesives, which can for various reasons, for example, due to sweat, move around, unprotecting the nipple from leaking milk.

Another type of absorbing disc is described in GB2532327A. In particular, a sweat-absorbing disc is described to respond to people with hyperhidrosis or people who exercise. The absorbing system is made by sandwich layers, the layer in contact with the skin and the outer layer in contact with the clothes being made with bamboo fibers. It also has the center layer that is absorbent, constituting a reservoir for sweat. According to the aforementioned document, the use of bamboo fibers is shown to be advantageous because they have a tubular shape, allowing to quickly remove moisture from the user's skin in the inner layer. Bamboo fibers in the outer layer allow the sweat to evaporate from the absorbing reservoir, without staining the user's clothes. In addition, bamboo is naturally antibacterial, reducing odor, and is naturally a thermoregulator. The absorbing center is formed by synthetic fibers. When the sweat-absorbing disc is used in the armpits, it may have several systems for attaching the disc to the user: a shoulder strap, a place for attaching to the bra strap, such as a clip. Although the focus of the document is bamboo fiber, it is not, in fact, as advantageous as intended. What is normally used in textile turns out to be a bamboo fiber that has undergone an intensive chemical process, thus losing some of its characteristics. In addition, bamboo fibers are more susceptible to shrinkage, which requires special care when washing.

Most absorbent items are formed by multilayer or detachable materials with very little functionality, which offer little sense of security to the user as well as discomfort during use.

In view of these disadvantages, it is intended to present a clothing item with efficient absorbing characteristics, without emission of odors when in contact with the body liquid/fluid and that promote safety and well-being to the user.

These facts are described in order to illustrate the technical problem solved by the embodiments of the present document.

### GENERAL DESCRIPTION

The present disclosure relates to a fluid/liquid absorbing system/structure for use in an underwear item for either male or female, adult or child for daily use, which comprises a system for absorbing body fluids, as well as an odor neutralization system. More specifically, this item comprises two systems:
an aesthetic system, which consists of the external configuration of the clothing item; and an absorbing system, which is integrated with the clothing item and is located along the absorption region, for example, genital or breast area. In one embodiment, said absorbing system comprises hybridized layers of fibrous materials, designed to respond to different types of body fluids and their different viscosities. In one embodiment, said clothing item is produced in three-dimensional knits, structured in multilayer and differentiated anti-leakage retention system. In one embodiment, said knits can be produced on single-cylindrical looms, large-diameter cylinders and discs and the confection modeling provides the incorporation of the absorbing system. In one embodiment, the combination of both systems contributes to maximizing the protection and psychological comfort of the user during use, since it promotes the neutralization of characteristic odors, it inhibits the growth of microorganisms, does not compromise the mobility of the user and guarantees a feeling of dryness close to the skin, as well as the imperceptibility of the product. In one embodiment, the clothing item described in this disclosure is a sustainable item, since it has a better environmental performance throughout its life cycle, as it can be reusable, that is, it becomes a product of greater durability and is a sturdy item, which allows it to be washable.

One aspect of the present disclosure refers to an absorbing system/structure comprising several overlapping layers, which will determine the thickness of said absorbing system, as well as, the different areas of absorption, such as the genital area through the release of menstrual fluids, vaginal fluids in general or urine from incontinence, armpits through the sweat fluids released by the sweat gland and nipples in the case of breastfeeding to absorb breast milk, depending on the region said system is to be integrated, the required capacity and the final clothing item. All these fluids have different behaviors, but they all moisturize the skin and sensitize it, thus keeping these regions dry, but with a minimum of hydration and free from microorganisms is extremely important for the well-being of the individual, avoiding problems with skin lesions or infections.

One aspect of the present disclosure concerns a clothing item absorbing structure for the absorption of body fluids comprising at least a set of four overlapping layers, comprising: a first layer with high density and porosity synthetic fibers suitable for the entry of body fluids; a second layer comprising a combination of hydrophilic and hydrophobic fibers with a plurality of protruding channels for dispersing body fluids; a third layer of cellulosic fibers capable of neutralizing odors and absorbing moisture; a fourth layer comprising a polymer, microporous and liquid impermeable membrane; and a strip connected along the periphery of said set of layers, wherein the strip together with the fourth layer seals said set of layers to prevent leakage of body fluids. Namely a thin, light, comfortable, washable and reusable absorbing structure that allows the user to use it on a daily basis.

The absorbing structure of the present disclosure allows the user to have a normal life, without being worried about smells or leaks and still being able to reuse and wash underwear with the incorporated absorbing structure. The structure of the present embodiment can be subject to washes greater than 30, preferably more than 50 washes, at 40 °C, preferably 60 °C.

The present disclosure further relates to clothing items, namely underwear clothing items that incorporate the absorbing structure described in the present disclosure.

In one embodiment, the set of layers is formed by the combination of natural and synthetic, hydrophilic and hydrophobic, capillary and absorbing fibers.

In one embodiment, the plurality of protruding channels of the second layer is arranged in a ribbed knit structure (3x3 rib knit structure), preferably where the rib is arranged in the direction of the piece width. This structure allows a better dispersion of body fluids in the structure.

In one embodiment, the third layer comprises a matrix-shaped knit structure, in particular an Italian terry structure, which allows for better retention.

In one embodiment, the barrier strip is folded face to face along the set of layers; so that the strip forms a "U" or "V" shaped profile concavity, the set of layers of the absorbing structure.

In one embodiment, the first, second and third layers comprise structures in fabric, preferably a knit.

In one embodiment, the first, second and third layers comprise a knit structure.

In one embodiment, the third and fourth layers of the set of layers are connected by lamination.

In one embodiment, the first and second layers of the set of layers are connected to the third and fourth layers by sewing.

In one embodiment, the first layer is sufficiently porous to allow any fluid to pass through, preferably the first layer comprises a structure derived from jersey, preferably jersey.

In one embodiment, the first layer comprises a first elastomeric yarn with a linear mass of 20 - 40 dtex and a second yarn is of non-natural fibers of synthetic or other naturally hydrophobic origin.

In one embodiment, the synthetic fibers of the first layer are selected from the group consisting of: polyamide, polyester, polypropylene, elastane, or combinations thereof.

In one embodiment, the natural fibers of the first layer are cellulosic fibers. Preferably cellulosic fibers are selected from a group consisting of fibers of: cotton, lyocell, modal, viscose or combinations thereof.

In one embodiment, the first layer is formed by mixing polyamide and/or polyester fibers with elastane. Preferably 85 - 90% (w/w) polyamide and 10 - 15% (w/w) elastane, preferably 86% (w/w) polyamide and 14% (w/w) elastane.

In one embodiment, the first layer comprises a thickness ranging between 0.50-0.70 mm.

In one embodiment, wherein the mass per unit area of the first layer ranges between 130-150 g/m², preferably 140-145 g/m².

In one embodiment, the second layer comprises a combination of hydrophilic and hydrophobic fibers with protruding channels in density and thickness for the dispersion of body fluids - (ribs in the structure).

In one embodiment, the second layer comprises polyester, viscose and elastane fibers.

In one embodiment, the second layer comprises 60 - 65% (w/w) polyester, 30 - 35% (w/w) viscose and 3 - 5% (w/w) elastane, preferably 63% (w/w) polyester, 33% (w/w) viscose and 4% (w/w) elastane.

In one embodiment, the second layer is a ribbed knit structure (structure derived from rib), preferably a 3x3 weft rib structure.

In one embodiment, the rib structure comprises a yarn with 65% (w/w) polyester and 35% (w/w) viscose, with a linear mass ranging between 150 -250 dtex (15 -25 tex), preferably 200 dtex; and a bare elastane yarn with a linear mass ranging between 22 - 33 dtex.

In one embodiment, the rib knit structure of the second layer comprises a loop length ranging between 24 - 26 mm, thickness of 0.80-0.90 mm and a mass per unit area of 225 - 245 g/m², preferably a density of 17 columns/cm, 26 rows/cm, thickness of 0.80-0.90 mm and a mass per unit area of 225 - 245 g/m².

In one embodiment, the yarn tension of the rib knit structure of the second layer ranges between 0.5-2.0 g/tex and the length of each loop ranges between 0.20 - 0.30 mm and the length of each loop of a zone of most absorption ranges between 5-20% in relation to the length of each loop of the previous zone.

In one embodiment, the third layer is formed by a derivative of Italian terry. Italian terry - is a single-sided weave knit, in which a yarn is added to each row and connected with the base yarn, forming long rings (elongated, similar to arches, forming wells) on the surface of the knit.

In one embodiment, the Italian terry comprises a combination of functionalized lyocell cotton with ammonia neutralizers and natural fibers, preferably modal.

In one embodiment, the Italian terry comprises a loop length of 24-26 mm, a thickness of 0.70 - 0.95 mm (preferably 0.80 - 0.90 mm) and a mass per unit area of 200-220 g/m²; preferably a density of 13-15 columns/cm and 14-16 rows/cm, a thickness of 0.80 - 0.90 mm and a mass per unit area of 200-220 g/m².

In one embodiment, the fourth layer comprises a density of 1.21 g/cc (kg/m³) and a melting point of 185 - 95 °C.

In one embodiment, wherein the fourth layer is resistant to heat hydrostatic pressure exceeding approximately 10 m and a breathability of approximately 3 m²Pa/W.

In one embodiment, wherein the fourth layer polymer membrane comprises polyurethane, polyester, or combinations thereof.

In one embodiment, wherein the thickness of the fourth layer ranges between 8 - 20 µm, preferably 10-15 µm.

In one embodiment, the thermo-adhesive strip is preferably softened to a temperature between 100-120 °C at a pressure of about 180 - 220 mbar for approximately 1.5-3 minutes, being resistant to approximately 8 water columns and washes up to 60 °C.

In one embodiment, the thermo-adhesive strip is resistant to more than 50 washes at a temperature of 60 °C, wherein the material of the strip is of non-natural origin, selected from polyamide, polyester, polypropylene or a combination thereof.

In one embodiment, the strip can be applied to the set of layers at a temperature of approximately 130 - 160 °C, for about 15 - 30 seconds, at a pressure of about 5- 7 bar.

In one embodiment, the third layer comprises carboxylic groups grafted onto the fiber, preferably 8 - 15% (w/w) sodium carbonate (Na₂Co₈), more preferably at a minimum bath ratio of 1:3 at pH 5-6.

Another aspect of the present disclosure relates to a reusable underwear clothing item comprising the absorbing system described in the present disclosure. Preferably, the absorbing system is configured for contacting the fluid release zone/preferably in contact with the genital zone.

In one embodiment, the clothing item can be: women's underwear, men's underwear, children's underwear, slips, boxer shorts, knickers, swimwear, thongs, pants, pantyhose, retros, leggings, t-shirts, bras, tops or a medical device.

In one embodiment, the clothing item may further comprise fastening means for connecting the absorbing structure to the clothing item, wherein the fastening means are selected from a list comprising buttons, push buttons, velcro, self-adhesive system, sewing, fusion sewing, heat sealing.

Wherein the body fluid/liquid can be urine, sweat, breast milk, menstrual or vaginal flows or any other fluid/liquid excreted by the human body.

### BRIEF DESCRIPTION OF THE DRAWINGS

For an easier understanding, figures are herein attached, which represent preferred embodiments which are not intended to limit the object of the present description.
**Figure 1**: Schematic representation of an embodiment of the developed absorbing system.

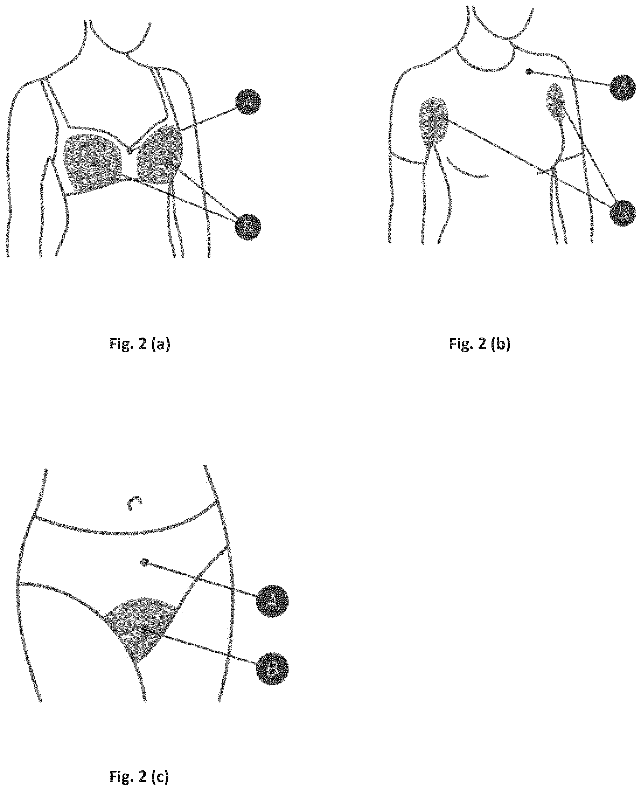

**Figure 2a****:** Schematic representation of an embodiment of the absorbing system applied to a bra.
**Figure 2b****:** Schematic representation of an embodiment of the absorbing system applied to a t-shirt.
**Figure 2c**: Schematic representation of one embodiment of the absorbing system applied to a pair of knickers.

### DETAILED DESCRIPTION

The present invention relates to an absorbing system for use in an underwear clothing item, either male or female, adult or child, which may be of daily use and which is provided with an absorbing system for body fluids, such as such as urine, sweat, breast milk, menstrual or vaginal flows or any other fluid excreted by the human body. In particular, the absorbing system comprises hybridized layers of fibrous materials, designed to respond to different types of fluids/liquids and their different viscosities. The system herein presented contributes to maximizing the protection and psychological comfort of the user during use, since it promotes the neutralization of characteristic odors, inhibits the growth of microorganisms, does not compromise the user's mobility and guarantees a feeling of dryness next to the skin, as well as the imperceptibility of the product. In addition, said clothing item presents a better environmental performance throughout its life cycle, as it can be reusable, that is, it becomes a product of greater durability and is a resistant item, which allows it to be washable.

The present disclosure concerns a clothing item absorbing structure, in particular to a washable and reusable structure, for the absorption of body fluids comprising at least a set of four overlapping layers, comprising: a first layer with high density and porosity synthetic fibers suitable for the entry of body fluids; a second layer comprising a combination of hydrophilic and hydrophobic fibers with a plurality of protruding channels for dispersing body fluids; a third layer of cellulosic fibers capable of neutralizing odors and absorbing moisture; a fourth layer comprising a polymer, microporous and liquid impermeable membrane; and a strip connected along the periphery of said set of layers, wherein the strip together with the fourth layer seals said set of layers to prevent leakage of body fluids.

The present disclosure further relates to clothing items, namely underwear clothing items that incorporate the absorbing structure described in the present disclosure.

In one embodiment, the absorbing system for absorbing body fluids, comprises:
at least four overlapping layers (1, 2, 3 and 4) formed by the combination of natural and synthetic, hydrophilic and hydrophobic, capillary and absorbing fibers,
wherein
   layer (1) is formed by a set of high density and porosity synthetic fibers - 1^{st} layer;
   layer (2) is formed by hydrophilic and hydrophobic fibers and is provided with high density and thickness protruding channels - 2^{nd} layer;
   layer (3) is formed by cellulosic fibers and is responsible for neutralizing odors and absorbing moisture - 3^{rd} layer; and
   layer (4) comprises a polymer, microporous and impermeable membrane - 4^{th} layer;
a barrier device/layer along the entire peripheral region, preferably a strip, more preferably a thermo-adhesive strip in the shape of a "U" or "V".

In one embodiment, synthetic fibers are selected from the fiber group of: polyamide, polyester, polypropylene, elastane and/or a mixture thereof and natural fibers are selected from the group of cellulosic fibers.

In one embodiment, cellulosic fibers are selected from the group of cotton fibers, lyocell, modal, viscose and/or a mixture thereof.

In one embodiment, the first layer (1) is formed by mixing polyamide and polyester fibers with elastane, the second layer (2) is formed by polyester, viscose and elastane fibers, the third layer (3) is formed by cellulosic fibers and the fourth layer (4) is formed by polyurethane or polyester.

In one embodiment, the first layer (1) is a jersey structure of about 86% polyamide and 14% elastane, the second layer (2) is a 3x3 weft rib structure with a mixture of approximately 63 % polyester, 33% viscose and 4% elastane and the third layer (3) is a structure formed by a derivative of Italian terry.

In one embodiment, the structure of Italian terry is based on the combination of cotton and functionalized lyocell with ammonia neutralizers and natural fibers, such as modal (modal is a generic name for rayon, a fiber manufactured by the viscose process, which has high tenacity and high modulus of elasticity to wet).

In one embodiment, between the third layer (3) and the fourth layer (4) there is an intermediate layer of cellulosic fibers based on cotton comprising three-dimensional rings in functionalized lyocell, weighing about 16-20 g/m², having a thickness of about 8 - 10 micrometers and a variable width.

In one embodiment, the first layer (1) is formed by at least two polyamide yarns, knitted by elastane vanisation, where a first yarn is elastomeric with a linear mass between 20 - 40 dtex and a second yarn is made of non-natural fibers of synthetic origin.

In one embodiment, the rib structure of the second layer (2) is composed of a yarn of approximately 65/35% polyester/viscose of a linear mass of about 20 tex and a bare elastane yarn of 22-33 dtex and presents a loop length of 24-26mm, a density of 17 columns/cm and 26 rows/cm, a thickness of 0.80-0.90mm and a mass of 225-245g/m².

In one embodiment, the Italian terry forming the third layer (3) has a loop length of 24-26 mm, density of 13-15 columns/cm and 14-16 rows/cm, thickness of 0.80-0, 90 mm and a mass of 200-220 g/m².

In one embodiment, the fourth layer (4) has a thickness of approximately 15 µm, density of 1.21 g/cc, melting point between 185-95 °C, resistant to heat hydrostatic pressure greater than approximately 10 m and has <3 m² PA/W.

In one embodiment, the barrier device is a thermo-adhesive strip or is integrated into the absorbing system by means of direct seam, having about 15-30 mm, softening point of approximately 100-110 °C at a pressure of about 180-220 mbar for approximately 1.5-3 minutes, being resistant to approximately 8 columns of water and washes approximately up to 60 °C.

In one embodiment, the barrier device is applied at a temperature of approximately 130-160 °C, for about 15-30 seconds, at a pressure of about 5-7 bar.

In one embodiment, the neutralization of odors is promoted by the carboxylic groups grafted onto the fiber and comprises about 8-15% sodium carbonate (NazCos), in a minimum bath ratio of 1:3 at pH 5-6.

In one embodiment, the absorbing system promotes maximization of absorption, neutralization of odors, inhibition of microorganism growth, protection from leakage of fluids and improvement of user comfort.

In one embodiment, the yarn tension ranges between 0.5-2.0 g/tex and the length of each loop ranges between 0.20 - 0.30 mm and the length of each loop in the area of most absorption ranges between 5-20% in relation to the length of each loop in the previous zone.

In one embodiment, the item is for male or female, adult or child use, of daily use, being sustainable and reusable.

In one embodiment, the clothing item is selected from a group consisting of: women's underwear, men's underwear, slips, boxer shorts, knickers, swimwear, thongs, pants, pantyhose, retro, leggings, t-shirts, bras, tops.

In one embodiment, the item comprises different materials and/or mixtures thereof, with different colors and textures.

In one embodiment, the absorbing system is integrated into the clothing item by means of mobile fastening systems, such as buttons, pressure, velcro, self-adhesive systems, among others or by means of fixed fastening systems, such as, direct stitching in the aesthetic system of the clothing item, heat sealing or others.

In one embodiment, the underwear clothing item described in the present disclosure can be a medical device for retaining and controlling body fluids.

In one embodiment, the item comprises advanced fibrous structures, aimed at maximizing absorption, neutralizing odors, protecting fluid leaks and improving user's comfort.

In one embodiment, said item comprises two systems: (i) an aesthetic system, which consists of the external configuration of the clothing item; and (ii) an absorbing system, which is integrated with the aesthetic system to obtain the clothing item and is located along the absorption region, for example, genital or breast area.

In one embodiment, said aesthetic system of the clothing item includes several configurations, which are common in underwear clothing items. Said item has an attractive and discreet design depending on the use thereof. The clothing item herein developed can be selected from the group of pieces: women's underwear, men's underwear, slips, boxer shorts, knickers, swimwear, thongs, pants, pantyhose, retro, leggings, t-shirts, bras, tops, among others. Additionally, said system can be made in different types of materials and/or mixtures thereof, with different colors and textures.

In one embodiment, the absorbing system comprises throughout its peripheral region a barrier device that, in conjunction with the absorbing system ensures the absorption of body fluids, in order to prevent leakage to the outer garment. The barrier described in the present disclosure can be a thermo-adhesive strip applied by pressure and heat, which is about 15-30 mm wide, seals along the peripheral region of the absorbing system, joining all the layers of the absorbing system and preventing the fluid absorbed by the absorbing area from leaking out thereof and compromising the user's comfort.

In one embodiment, the barrier described can be integrated into the absorbing structure of the present disclosure by means of direct stitching of the device to the system or by means of heat-sealing, which can be either inserted in bra bags for cupping or fixed directly on clothing.

Additionally, due to the intrinsic properties of said absorbing system, it comprises a mechanism capable of neutralizing odors and guaranteeing the sensation of dryness close to the user's skin.

In one embodiment, the regenerated cellulosic-based fiber comprises carboxyl groups (-COOH) which react with the surrounding ammonia, transforming it into odorless compounds. These carboxylic groups are grafts polymerized on the fiber during its dyeing process in aqueous medium, where about 8-15% sodium carbonate (NazCOs) is added, in a minimum bath ratio of 1:3 at pH 5-6.

In one embodiment, the absorbing system is integrated into the clothing item by means of mobile fastening systems, such as buttons, push buttons, velcro, self-adhesive systems, among others or by means of fixed fastening systems, such as, sewn directly onto the aesthetic system of the garment, heat sealing or others. In a preferred embodiment, the absorbing system is completely fixed and integrated into the underwear clothing item, by means of heat sealing of the barrier device.

Specifically, said barrier device is applied at a temperature of approximately 130-160 °C, for about 15-30 seconds, at a pressure of about 5-7 bar. In addition, its softening point is approximately 100-110 °C at a pressure of approximately 180-220 mbar for approximately 1.5-3 minutes, being resistant to approximately 8 columns of water. Another characteristic of this barrier device is that it is resistant to washing at temperatures up to 60 °C.

Particularly, said absorbing system comprises hybridized layers of fibrous materials, designed to respond to different types of fluids and their viscosity, as in the case of fluids from, for example, urinary incontinence, sweat or menstruation. The absorbing system is based on the natural capillarity of the fibers that naturally carry the liquids, based on the immediate absorption of the fluid in contact with its outer surface and its orientation towards the furthest surfaces of the skin, in order to provide a better dryness and breathability sensation close to the skin.

In a preferred embodiment, the absorbing system comprises at least four layers.

In one embodiment, the clothing item is produced in three-dimensional knits, multilayer structures and differentiated leakage retention system. Said knits are produced on single-cylinder looms, large diameter cylinders and discs and the confection modeling provides the incorporation of absorbing systems to the clothing item and this combination contributes to maximizing the protection and psychological comfort of the user during use.

In addition, the clothing item developed has characteristics that promote the neutralization of characteristic odors, inhibits the growth of microorganisms, does not compromise the mobility of the user and guarantees a feeling of dryness close to the skin, as well as the imperceptibility of the product during use. Additionally, the clothing item now proposed is a sustainable item, since it presents a better environmental performance throughout its life cycle. It can be reusable, which makes it a product of greater durability and is a wash resistant item.

In one embodiment, the absorbing system comprises multiple layers of structures formed by the combination of natural and synthetic fibers and presented as a set of high capillary fibers (less absorbing) and a set of fibers with greater absorption and low capillarity, with at least four layers formed by a polymer film. The combination of synthetic and cellulosic (natural) fibers was strategically selected, since the first promotes an increase in the speed of wettability, capillarity and diffusion of body fluid and the second promotes fluid retention.

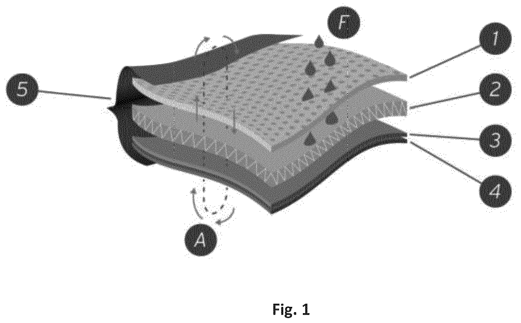

In one embodiment, Figure 1, represents an embodiment wherein the layers that make up the absorbing system are superimposed so that the layers (1, 2 and 3) formed by the set of capillary fibers (less absorbing) and the absorbing fiber are firstly arranged in said system. While layer (4), comprising a microporous and impermeable membrane is arranged so that it is away from the contact surface of the user, that is, skin and/or mucosa and the barrier device (5) is arranged along the entire periphery of the absorbing system.

In a preferred embodiment, layer (1) is composed of a set of high structural density and porosity synthetic fibers, which provide greater capillarity and low absorption; layer (2), comprising hydrophilic and hydrophobic fibers and comprising protruding channels of high structural density with 7-10 pores per centimeter and thickness, in order to provide high absorption. Said layer (2) is positioned on one of the layers of the set of absorbing fibers, that is, layer (3), which comprises cellulosic fibers, this layer (3) being responsible for neutralizing odors and absorbing moisture. Layers (1, 2 and 3) configure the surface of the absorbing system, to allow the body fluid to be removed as quickly as possible from the user's contact surface.

In a preferred embodiment, the second layer comprises fibers with a thickness between 0.7-0.95 mm; a column density between 15-20 columns/cm and a row density between 22-30 columns/cm.

In one embodiment, the fibers making up the set of capillary fibers can be synthetic fibers or natural fibers. Synthetic fibers can be selected from: polyamide, polyester, polypropylene, elastane, or combinations thereof. Natural fibers are cellulosic fibers selected from: cotton, lyocell, modal, viscose or combinations thereof.

In a preferred embodiment, the fibers with the greatest capillarity used in the first layer structure of the absorbing system were polyamide, polyester and elastane fibers. This highly porous and drop-shaped structure facilitates the entry and permeability of more viscous body fluids through a first layer (1), in order to facilitate the routing of this fluid between the layers.

In a preferred embodiment, the second layer (2) of polyester, viscose and elastane fibers is composed of transverse channels that increase the surface area with the fluid (e.g. the rib knit structure). The increase in surface area favors capillarity, absorption and dispersion of the fluid over the entire surface of the absorbing system, facilitating the permeability of the fluid to the next layer (layer 3) where there is odor neutralization in the fourth waterproofing layer (4).

In one embodiment, the third layer (3) comprising superabsorbing materials, such as cellulosic fibers: cotton, modal, lyocell or combinations thereof, is responsible for the neutralization of odors, as the greatest effect on the neutralization of ammonia produced by bacteria.

In one embodiment, the fourth layer (4) is composed of an impermeable and microporous membrane formed by a polymer film, preferably a thermoplastic selected from polyurethane or polyester, which prevents the passage of the fluid, but facilitates the permeability of water vapors in order to allow breathing in the area and to decrease local temperature.

In a preferred embodiment, the first layer (1) of the absorbing system is preferably a planar fibrous structure, such as a weft knit derived from the jersey structure. Preferably, the jersey structure is based on the combination of a mixture of synthetic fibers, such as: polyamide, polyester and/or the like and/or a mixture thereof, with elastomer fibers.

In a preferred embodiment, at least two yarns of polyamide or similar are used for manufacturing of the structure, which are knitted by vanisation with elastane, or by any other usual technique.

In a preferred embodiment, a first yarn of the knit is elastomeric with a linear mass between 20 - 40 dtex, while a second yarn is made of non-natural fibers of synthetic origin. The preferred composition of the jersey-derived structure that makes up the first layer (1) of the absorbing system comprises about 86% polyamide and 14% elastane. During knitting, the parameters for controlling the production of the knit are adjusted to maintain the desired elasticity (10-30%) and promote a greater conformation of the final clothing item, as well as its elasticity.

In a preferred embodiment, the adjustment of the input tension of the elastane yarn with any other fibrous material, contributes to controlling the elasticity of the knit, while in the base yarn (of polyamide fiber) it is knitted according to the protocols usually known to those skilled in the art for knitting weft knits.

In a preferred embodiment, the second layer (2) of the absorbing system is a weft knit derived from a 3x3 weft rib structure, with a loop length of 24-26 mm, having a density of 17 columns/cm and 26 rows/cm, having a thickness of 0.80-0.90 mm and a mass of 225-245 g/m². Due to its structure, this layer forms transverse channels that allow increasing the surface area with the liquid in order to increase the absorption speed and to direct the liquid more quickly between the first and the third layer (1 and 3). In addition to the channels, this transfer is also achieved by the combination of hydrophilic and hydrophobic fibers, such as polyester, viscose and elastane fibers.

In a preferred embodiment, the rib structure is based on the combination of a mixture of approximately 63% polyester, 33% viscose and 4% elastane, being composed of a yarn of approximately 65/35% polyester/viscose of a linear mass of about 20 tex and a bare elastane yarn of 22-33 dtex. This structure creates several transversal channels on the upper and lower surface of the structure, in addition to an intrinsic porosity that facilitates the entry of fluids with different viscosities.

In a preferred embodiment, the third layer (3) of the absorbing system is a structure formed by a derivative of Italian terry. The structure of Italian terry used is based on the combination of cotton and functionalized lyocell with ammonia neutralizers and natural fibers of cellulosic origin with high moisture resistance, such as modal.

In a preferred embodiment, said third layer structure of Italian terry is provided with a first smooth, uniform and regular surface, which will connect upon manufacturing to the fourth layer (4) of the absorbing system. Said membrane weighs about 16-20 g/m², has a thickness of about 8-10 micrometers and a variable width according to the clothing item, in which the absorbing system will be inserted.

In a preferred embodiment, the fourth layer is applied onto the third layer (3), on the smoothest and most compact surface, by the laminating process, consisting of the joining of two layers by applying glues or resins through heat or pressure. This process serves to join several (layer) structures creating a sandwich of knit structures or joining one of the knit structures to a laminate or membrane. This membrane provides the fourth layer with particular characteristics, in order to make the absorbing system highly flexible, adaptable, breathable and of high thermal control.

In one embodiment, the fourth layer consists of a polymer membrane.

In a preferred embodiment, the physical characteristics of the Italian terry structure forming the third layer (3) of the absorbing system are: loop length of 24-26 mm, density of 13-15 columns/cm and 14-16 rows/cm, thickness of 0.80-0.90 mm and a mass of 200-220 g/m².

In a preferred embodiment, the fourth layer (4) of the absorbing system has a thickness of approximately 15 µm, a density of 1.21 g/cc, melting point between 185-95 °C, is resistant to hot hydrostatic pressure greater than approximately 10 m and has <3m² Pa/W.

In a preferred embodiment, the absorbing system of the present disclosure comprises a barrier strip (5) which helps the absorbing system to prevent unwanted fluid leakage.

In one embodiment, the barrier device/strip (5) may have a thread tension ranging between 0.5-2.0 g/tex and the length of each loop ranges between 0.20 - 0.30 mm, the length of each loop in a most absorbing zone ranging between 5 - 20% compared to the length of each loop in the previous zone. Preferably, the strip is a fabric or knit dimensionally stable to temperature and pressure, of synthetic origin, selected from Polyester, polyamide, polypropylene or a combination thereof.

In one embodiment, the manufacturing process of the absorbing system/structure described in the present disclosure is usual for those skilled in the art. Therefore, in general, said absorbing system is manufactured in single cylinder knitting machines (needles in the cylinder) of large diameter (20"- 40"), a technology associated with the production of weft knit. The technology used herein has several advantages, namely: flexibility in the ability to select needles; greater variety of knit structures; ease in changing the design; allows the development of several types of tubular knit shapes; economical in terms of production costs and time; greater productivity as it offers maximum production efficiency due to the possibility of reaching high speeds; possibility to control the loop size; reduction of tension applied to the yarn; fiber type diversity; absence of bulky and irritating seams; it gives lightness, softness, since there are no seams; more constant product quality, gives a better appearance and greater comfort in contact with the body.

In one embodiment, the manufacturing process of the underwear clothing item is also a common process and consists of cutting the knit and its jersey derivatives by its adaptability and fixing to the user's body, then it goes on to the manufacturing phase of the piece itself and its aesthetic finish, so that the absorbing system can be integrated into the piece.

An embodiment of the present disclosure refers to the use of the absorbing system in an underwear clothing item. Finally, another embodiment refers to the use of said clothing item as a medical device for the retention and control of body fluids/liquids.

In one embodiment of the present disclosure, said clothing item does not compromise the clinical status of the user/patient nor the safety of the user, considering that the benefit provided to the user is compatible with a high degree of health protection and security.

The term "comprises" or "comprising" when used herein is intended to indicate the presence of the features, elements, integers, steps and components mentioned, but does not preclude the presence or addition of one or more other features, elements, integers, steps and components, or groups thereof.

The embodiments described are combinable with each other.

The present invention is of course in no way restricted to the embodiments described herein and a person of ordinary skill in the art can foresee many possibilities of modifying it and replacing technical features with equivalents depending on the requirements of each situation as defined in the appended claims.

The following claims define additional embodiments of the present description.

### References

[1] European Commission, "Circular economy: closing the loop," Geneva, 2018.
[2] B. Das, A. Das, V. K. Kothari, R. Fanguiero, and M. de Araújo, "Moisture transmission through textiles: Part I: Processes involved in moisture transmission and the factors at play," Autex Res. J., vol. 7, no. 2, pp. 100-110, 2007.
[3] N. R. S. Hollies, M. M. Kaessinger, and H. Bogaty, "Water Transport Mechanisms in Textile Materials" Part I: The Role of Yarn Roughness in Capillary-Type Penetration," Text. Res. J., vol. 26, no. 11, pp. 829-835, Nov. 1956, doi: 10.1177/004051755602601102.
[4] N. R. S. Hollies, M. M. Kaessinger, B. S. Watson, and H. Bogaty, "Water Transport Mechanisms in Textile Materials: Part II: Capillary-Type Penetration in Yarns and Fabrics," Text. Res. J., vol. 27, no. 1, pp. 8-13, Jan. 1957, doi: 10.1177/004051755702700102.
[5] B. Das, A. Das, V. K. Kothari, R. Fanguiero, and M. de Araújo, "Moisture transmission through textiles: Part I: Processes involved in moisture transmission and the factors at play," Autex Res. J., vol. 7, no. 2, pp. 100-110, 2007.
[6] R. Shishoo, "Introduction to textiles in sport," in Textiles for Sportswear, R. Shishoo, Ed. Woodhead Publishing, 2015, p. 272.
[7] A. Das R. M. Manshahia, "Smart coatings for sportswear," in Active Coatings for Smart Textiles, 2015.
[8] Araguacy Paixão Almeida Filgueiras, "Optimização do Design Total de Malhas Multifuncionais para Utilização em Vestuário Desportivo," Universidade do Minho, 2008.
[9] H. F. da C. Soutinho, "Design Funcional de Vestuário Interior," Universidade do Minho, 2006.
[10] R. Fangueiro, A. Filgueiras, F. Soutinho, and Xie Meidi, "Wicking Behavior and Drying Capability of Functional Knitted Fabrics," Text. Res. J., vol. 80, no. 15, pp. 1522-1530, Sep. 2010, doi: 10.1177/0040517510361796.
[11] J. R. Ajmeri and C. J. Ajmeri, Developments in the use of nonwovens for disposable hygiene products. Elsevier Ltd, 2016.
[12] P. K. Chatterjee, "Products and technology perspective," in Absorbent technology, & B. S. G. P. K. Chatterjee, Ed. Elsevier Science, 2002.
[13] C. Bobel, "'Our revolution has style': Contemporary menstrual product activists 'doing feminism' in the third wave," Sex Roles, vol. 54, no. 5-6, pp. 331-345, 2006, doi: 10.1007/s11199-006-9001-7.

## Claims

1. Clothing item absorbing structure for absorbing body fluids comprising at least a set of four overlapping layers, comprising
a first layer with high density and porosity synthetic fibers suitable for the entry of body fluids;
a second layer comprising a combination of hydrophilic and hydrophobic fibers with a plurality of protruding channels for dispersing body fluids;
a third layer of cellulosic fibers capable of neutralizing odors and absorbing moisture;
a fourth layer comprising a polymer, microporous and liquid impermeable membrane; and
a strip connected along the periphery of said set of layers, wherein the strip together with the fourth layer seals said set of layers to prevent leakage of body fluids.

2. Structure according to the preceding claim, wherein the plurality of protruding channels of the second layer is arranged in a rib knit structure, preferably in the direction of the piece width.

3. Structure according to any one of the preceding claims, wherein the third layer comprises a knit structure in the form of a matrix, in particular an Italian terry structure.

4. Structure according to any one of the preceding claims, wherein the barrier strip is folded face to face along the set of layers; so that the strip forms a "U" or "V" shaped profile concavity, the set of layers of the absorbing structure.

5. Structure according to any one of the preceding claims, wherein the first, second and third layers comprise a knit structure.

6. Structure according to any one of the preceding claims, wherein the third and fourth layers of the set of layers are connected by lamination.

7. Structure according to any one of the preceding claims, wherein the first and second layers of the set of layers are connected to the third and fourth layers by sewing.

8. Structure according to any one of the preceding claims, wherein the second layer comprises a combination of hydrophilic and hydrophobic fibers with protruding channels in density and thickness for the dispersion of body fluids.

9. Structure according to any one of the preceding claims, wherein the first layer is a jersey structure.

10. Structure according to any one of the preceding claims, wherein the first layer comprises a first elastomeric yarn with a linear mass of 20 - 40 dtex and a second yarn made of non-natural fibers of synthetic origin.

11. Structure according to the preceding claim, wherein synthetic fibers are selected from the group consisting of: polyamide, polyester, polypropylene, elastane, or combinations thereof.

12. Structure according to any one of claims 8-10, wherein the natural fibers are cellulosic fibers.

13. Structure according to the preceding claim, wherein the cellulosic fibers are selected from a group consisting of: cotton, lyocell, modal, viscose fibers or combinations thereof.

14. Structure according to any one of claims 8-13, wherein the first layer is formed by mixing polyamide and/or polyester fibers with elastane.

15. Structure according to the preceding claim comprising 85 - 90% (w/w) polyamide and 10 - 15% (w/w) elastane, preferably 86% (w/w) polyamide and 14% (w/w) elastane.

16. Structure according to any one of claims 8-15, wherein the thickness of the first layer ranges between 0.50-0.70 mm.

17. Structure according to any one of claims 8-16, wherein the mass per unit area of the first layer ranges between 130-150 g/m², preferably 140-145 g/m².

18. Structure according to any one of the preceding claims, wherein the second layer is a rib knit structure, preferably a rib-derived rib knit structure, more preferably a 3x3 weft rib-derived rib knit structure.

19. Structure according to any one of the preceding claims, wherein the rib knit structure of the second layer comprises a loop length ranging between 24 - 26 mm, a thickness of 0.80 - 0.90 mm and a mass per unit area of 225 - 245 g/m², preferably with a density of 17 columns/cm, 26 rows/cm, a thickness between 0.80-0.90 mm and a mass per unit area of 225 - 245 g/m².

20. Structure according to the preceding claim, wherein the rib structure comprises a yarn with 65% (w/w) polyester and 35% (w/w) viscose with a linear mass ranging between 150 - 250 dtex, and a bare elastane yarn with a linear mass ranging between 22 - 33 dtex.

21. Structure according to any one of the preceding claims, wherein the second layer comprises polyester, viscose and elastane fibers.

22. Structure according to any one of the preceding claims, wherein the second layer comprises 60 - 65% (w/w) polyester, 30 - 35% (w/w) viscose and 3 - 5% (w/w) elastane, preferably 63% (w/w) polyester, 33% (w/w) viscose and 4% (w/w) elastane.

23. Structure according to any one of the preceding claims, wherein the third layer is formed by a derivative of Italian terry.

24. Structure according to the preceding claim, wherein the Italian terry comprises a loop length of 24-26 mm, a thickness of 0.70 - 0.95 mm and a mass per unit area of 200-220 g/m²; preferably a density of 13-15 columns/cm and 14-16 rows/cm, a thickness of 0.80 - 0.90 mm and a mass per unit area of 200-220 g/m².

25. Structure according to the preceding claim, wherein the Italian terry comprises a combination of functionalized lyocell cotton with ammonia neutralizers and natural fibers, preferably modal.

26. Structure according to any one of the preceding claims, wherein the fourth layer comprises a density of 1.21 g/cc (kg/m³) and a melting point of 185 - 95 °C.

27. Structure according to any one of the preceding claims, wherein the fourth layer is resistant to a hot hydrostatic pressure of more than 10 m and has a breathability of approximately 3 m²Pa/W.

28. Structure according to any one of the preceding claims, wherein the polymer membrane of the fourth layer comprises polyurethane, polyester, or combinations thereof.

29. Structure according to any one of the preceding claims, wherein the thickness of the fourth layer ranges between 8 - 20 µm, preferably 10-15 µm.

30. Structure according to the preceding claim, wherein the barrier strip is thermally bonded, preferably softened to a temperature between 100-120 °C at a pressure of about 180-220 mbar for approximately 1.5-3 minutes, being resistant to approximately 8 water columns and washes up to 60 °C.

31. Structure according to any one of the preceding claims, wherein the third layer comprises carboxylic groups grafted onto the fiber, preferably 8 - 15% (w/w) sodium carbonate, more preferably in a minimum bath ratio of 1:3 at pH 5-6.

32. Structure according to any one of the preceding claims, wherein the set of layers is formed by the combination of natural and synthetic, hydrophilic and hydrophobic, capillary and absorbing fibers.

33. Reusable underwear clothing item comprising the absorbing system described in any one of the preceding claims.

34. Clothing item according to the preceding claim, wherein the absorbing system is configured to contact the fluid release zone/preferably in contact with the genital zone.

35. Clothing item according to any one of claims 33-34, wherein the clothing item is women's underwear, men's underwear, children's underwear, slips, boxer shorts, knickers, swimwear, thongs, pants, pantyhose, retros, leggings, t-shirts, bras, tops or a medical device.

36. Clothing item according to any one of claims 33-35 further comprising fastening means for connecting the absorbing structure to the clothing item, wherein the fastening means are selected from a list comprising buttons, push buttons, Velcro, self-adhesive system, sewing, melting sewing, heat sealing.
